Europäisches Patentamt

European Patent Office

Office européen des brevets

(11) Publication number: **0 102 724**

**A2**

(12) **EUROPEAN PATENT APPLICATION**

(21) Application number: **83304171.8**

(22) Date of filing: **19.07.83**

(51) Int. Cl.³: **A 61 C 17/02**

(30) Priority: **23.08.82 US 410257**

(43) Date of publication of application:
**14.03.84 Bulletin 84/11**

(84) Designated Contracting States:
**AT BE CH DE FR GB IT LI NL SE**

(71) Applicant: **TELEDYNE INDUSTRIES, INC.**
**1901 Avenue of the Stars**
**Los Angeles, CA 90067(US)**

(72) Inventor: **Hickman, Clarence James**
**1761 Concord Drive**
**Ft. Collins Colorado 80526(US)**

(74) Representative: **Godsill, John Kenneth et al,**
**Haseltine Lake & CO. Hazlitt House 28 Southampton**
**Buildings Chancery Lane**
**London WC2A 1AT(GB)**

(54) Pumping system for producing a liquid jet.

(57) A piston pump (10) for delivering intermittent liquid jets through a nozzle pumps liquid from a reservoir through an inlet valve (24), pump chamber (27), outlet orifice (21), fluid coupling (18), and outlet conduit to the nozzle of a miniaturised appliance having a reduced reservoir height and reduced piston stroke, relative to standard units, tending to jeopardise consistent priming of the pump under a pressure head provided by a reduced liquid column in the filled reservoir.

The fluid coupling (18) has a first tubular member (46) extending from the outlet orifice (21) a second tubular member (47) extending around and being removable from the first tubular member and having the outlet conduit connected thereto, and consistent priming of the pump at the reduced reservoir height and reduced piston stroke is assured by an outlet check valve (48) located in the first tubular member and biased toward the outlet orifice.

*FIG.1*

8027

- 1 -

## Pumping system for producing a liquid jet

The invention relates to a pumping system for producing a
liquid jet and may, for instance, be implemented in oral
hygiene appliances for cleaning and massaging human teeth
and gums.

By way of background, reference may be had to applicant's
United States Patent 3 227 158, disclosing oral hygiene
methods and apparatus for producing intermittent liquid jets.
The then preferred pump shown in that patent had both inlet
and outlet valves, as do the vast  majority of piston pumps.
As apparent from applicant's subsequent United States Patent
3 393 673, the traditional outlet valve could thereafter be
eliminated in oral hygiene units in conjunction with the
use of a liquid jet outlet conduit of relatively unyieldable
material and a liquid pulse intensity regulation operating
with a controllable backflow of pumped liquid from the pump
chamber itself, as distinguished from the outlet conduit.
That principle has been successfully applied to oral hygiene
equipment and still enjoys widespread use in a variety of
forms.

Recently, an oral hygiene appliance of the above mentioned
type has been equipped with an outlet valve, as may be seen
from DE-OS 29 10 982.  Tests with an oral hygiene appliance embodying the latter teaching, however, failed to indicate achievement of significant benefits from the use of the latter outlet valve.

In particular, a large number of units embodying the piston pump disclosed in DE-OS 29 10 982 were purchased and submitted to various tests at different presssure settings, both with outlet valve and without outlet valve. In that type of commercial model, the pump cylinder has a diameter of 7.7 mm and the piston has a stroke of 7 mm, providing a liquid displacement of about 330 $mm^2$ per stroke. That commercial model, as well as similar units, comes equipped with a liquid reservoir of about 500 $cm^3$ providing a pressure head from a liquid column of a height of over 10 cm when the reservoir is initially filled preparatory to commencement of a pumping operation.

Tests conducted with these units at their various pressure settings provided by their manufacturer showed an overall improvement of less than four percent from the use of the outlet ball valve shown at 23 to 25 in the above mentioned DE-OS 29 10 982 compared to operation at the same settings after removal of the valve ball 23 and spring 24 shown in that OS. At lower settings, the flow rate was even reduced by the use of the mentioned outlet valve, while the pressure of the pump liquid deteriorated by more than five percent over the various settings when the mentioned outlet valve was used.

In terms of volumetric efficiency, the effect of the mentioned outlet valve is insignificant, being at best a few percent. More than twice that improvement can readily be obtained by using the single-valve principle disclosed in the above mentioned US Patent 3 393 673 and its more

modern version disclosed in applicant's US patent 3 425 410, wherein an adjustable rod acting on the inlet valve is employed for effecting the variable backflow of liquid from the pump chamber for pulse intensity regulation.

Although the units so far described are portable, they are generally too bulky for the traveller or persons engaged in similar pursuits, where smallest possible size and lowest practical weight are of great importance. A battery-operated oral hygiene appliance of reduced size, which employs the above mentioned single-valve principle, is apparent from US Patent 3 800 786. In order to keep at least the size of the appliance down as much as possible, the stroke of the pump piston and the height of the water column in the liquid reservoir in a commercial model according to that patent were reduced by about one half relative to their average values in regular size tabletop models, including the commercial units embodying the principle of the above mentioned DE-OS 29 10 982. The resulting reduction in pressure head and displacement eventuated priming difficulties and inconsistencies in delivered pulse pressures, and that oral hygiene appliance was discontinued by its manufacturer.

A battery-operated oral hygiene appliance which can be telescoped into a total space of less than 400 cm$^3$ and still provides a liquid reservoir volume of about 250 cm$^2$ in its active position is apparent from applicant's US Patent 4 302 186 and from its corresponding European Patent Application 80301397 (029 636). While that travel and miniature version has weight, size and operating advantages over the above mentioned reduced size version, the reduced stroke of its single-valve pump and the reduced size of its reservoir or reduced height of its reservoir liquid column brought about occasional priming difficulties and delivered pulse pressure inconsistencies.

The subject invention overcomes these problems without sacrificing attainable miniaturisation relative to standard models now on the market or still in use, including those embodying the features disclosed in the above mentioned U.S. Patents 3 393 673 and 3 425 410 and in the above mentioned DE-OS 29 10 982.

In particular, the subject invention resides in a piston pump for delivering intermittent liquid jets through a nozzle by pumping liquid from a reservoir through an inlet valve, pump chamber, outlet orifice, fluid coupling, and outlet conduit to the nozzle of a miniaturised appliance having a reduced reservoir height and reduced piston stroke, relative to standard units, tending to jeopardise consistent priming of the pump under a pressure head provided by a reduced liquid column in the filled reservoir, characterised in that the fluid coupling has a first tubular member extending from the outlet orifice, a second tubular member extending around and being removable from the first tubular member and having the outlet conduit connected thereto, and consistent priming of the pump at the reduced reservoir height and reduced piston stroke is assured by an outlet check valve located in the first tubular member and biased toward the outlet orifice.

According to a preferred embodiment of the subject invention, the first tubular member is a valve guide for the outlet check valve. Alternatively or additionally, a retainer member may be provided for retaining the outlet check valve in the first tubular member. This retainer member preferably is a third tubular member fit into the first tubular member for retaining the outlet check valve in the first tubular member. A circular seal captivated by the retainer or third tubular member may be provided for sealing the second tubular member releasably relative to the first tubular member.

- 5 -

0102724

Specific ways of carrying out the invention are described in detail below with reference to the drawings which illustrate only a specific embodiment, and in which:-

Fig. 1 is a sectional view of relevant portions of a piston pump according to an embodiment of the subject invention, and

Fig. 2 is a view taken on the line 2 - 2 in Fig. 1.

By way of background, the pump unit 10 shown in the drawings may be employed in the oral hygiene or liquid jet producing appliance disclosed in the above mentioned US Patent 4 302 186 and European Patent Application 80301397 (029 636), which are herewith incorporated by reference herein for this purpose. It may be noted by way of example that the oral hygiene appliance shown in the latter patent and patent application is currently on the market in a miniaturised version, having a piston stroke of only 3.5 mm and a useful reservoir height of about 5 cm. This is only about one half the above mentioned piston stroke and liquid column height in the reservoir of the standard oral hygiene appliance embodying the pumping unit disclosed in DE-OS 29 10 982. By way of further example, the above mentioned battery-operated oral hygiene appliance according to US Patent 3 800 786 had a piston stroke of 5 mm and a useful reservoir height of about 6 cm. In general terms, the reduced piston stroke in the pump units on which this subject invention is practised is not more than 5 mm and the reduced height of any reservoir from which liquid is supplied to these pump units is not more than what is necessary to provide a useful liquid column of not higher than 7 cm.

The pump unit 10 includes a generally T-shaped hollow body 12, and a chamber 13 is defined in its leg 14. Disposed for reciprocation within chamber 13 is a piston 15 coupled by a rod 16 to a piston drive. By way of example, the piston rod 16 may be coupled eccentrically to a face gear which is driven via a spur gear by an electric motor, all as shown in the above mentioned US Patent 4 302 186 and corresponding European Patent Application 80301397 (029 636).

One arm 17 of pump body 12 is disposed at and effectively coupled to an outlet or fluid coupling 18 by an integral extension which defines well 19. Beneath well 19 in arm 17 is a cross-wall in which is defined an exit orifice 21. The other arm 22 of pump body 12 has an inlet 23 for liquid to be pumped. The inlet 23 may be connected to a reservoir of the type and in the manner shown in the above mentioned US Patent 4 302 186 and corresponding European Patent Application 80301397 (029 636).

A first check valve 24, slidable within a valve guide 25, is disposed within arm 22 and is poled by a compression spring 26 to pass liquid only from the inlet 23 into the pump chamber 27. The first valve 24 thus constitutes and acts as the inlet valve of the pump unit 10.

The well 19 serves as part of a connecting means for coupling the pump output to an outlet nipple 29 over which an outlet conduit (not shown) may be disposed. By way of example, the outlet conduit may be formed by a flexible hose to which is connected a jet-forming nozzle, as described in the above mentioned US Patent 4 302 186 and corresponding European Patent Application 80301397 (029 636). As there described, nozzles with different orifices may alternatively be employed for effecting a jet volume or pressure variation.

The outlet nipple 29 is part of a plug 30 which is removably insertable into the well 19 and is hollow so as to transmit liquid from the pump into any outlet conduit connected to the nipple 29. An 0-ring 31 seals plug 30 within well 19.

The drawings show part of a housing wall 33 at the pump outlet 18. By way of example, the wall 33 may be a wall of the main or pump housing shown in the above mentioned US Patent 4 302 186 and corresponding European Patent Application 80301397 (029 636).

The plug 30 has a pair of oppositely spaced projections or lugs 35 and 36 which are insertable through notches 37 and 38 in the housing wall 33 into a pair of oppositely spaced recesses 39 and 40 in a flange 41 of the arm 17 of the pump unit 10. The laterally projecting lugs 35 and 36 of the plug 30 may be shaped to permit insertion of plug 30 within opening 43 in only one appropriate rotational position. One or two detents 44 may be provided in the flange 41 at either or both of the recesses 39 and 40. The housing wall 33 is sufficiently flexible to provide a spring action so that lugs 35 and 36 are cammed over detent 44 and into a locked position upon insertion of plug 30 into opening 43 and rotation by 90° for a bayonet-type coupling.

The most significant change over the disclosure of the above mentioned US Patent 4 302 186 and corresponding European Patent Application 80301397 (029 636) occurs in pump arm 17 on the exhaust side of the pump. Integrally projecting outwardly from the bottom of well 19 is a concentrically-disposed inner cylinder 46 which opens into orifice 21. 0-ring 31 is captivated in place by means of retainer 51 pressed into the interior of cylinder 46. Cylinder 46 also serves as a valve guide 50, accommodating the valve 48 biased or poled by a compression spring 53 disposed within cylinder 46 in a position between retainer 51 and valve 48.

In seeking to achieve a compact assemblage that was small in size compared to earlier oral irrigation appliances that served generally the same purpose, the reduced size in elevation of the invertable reservoir shown in the above mentioned US Patent 4 302 186 and corresponding European Patent Application 80301397 (029 636) significantly reduces the head of pressure which delivers the water or other liquid from that reservoir through inlet 23 into the pump. At the same time, the decreased overall dimensions of the unit permit use of only a comparative shorter length of stroke of the piston 15 within the pump. As a result of those parameters, and in view of the normal viscosity of water or other liquid which is employed, the unit of the above mentioned US Patent 4 302 186 and corresponding European Patent Application 80301397 (029 636) sometimes tended to less than optimal operation, because of the lowered pressure developed in the exhaust section as piston 15 worked to inlet a new quantity of the liquid in order to subsequently produce the next pulse delivered through the outlet nozzle. While that may have led to some inconsistency in the delivered pulse pressures, the primary problem was an inability of the pump always to prime itself properly after operation had been discontinued for a period of time. The presence of valve 48 overcomes that problem.

In use, outlet valve 48 is maintained in the closed condition during the intake stroke during which valve 24 is pulled into the open condition. On the other hand, outlet valve 48 opens on the exhaust stroke when inlet valve 24 is forced into its closed condition. That is, the two valves alternate in operation with reference to the two-cycle operation of piston 15.

Although the pump unit herein disclosed is primarily intended for use in miniaturised oral hygiene appliances, it may be used in other applications including, for instance, wound debridement, cleaning of the ear canal and other medical applications.

In these and other applications, the piston pump 10 delivers intermittent liquid jets from a reservoir through an inlet valve 24, pump chamber 27, outlet orifice 21, fluid coupling 18, an outlet conduit and a jet nozzle of a miniaturised appliance having a reduced reservoir height and reduced piston stroke relative to standard units, as would in practice tend to jeopardize consistent priming of the pump under a pressure head provided by a reduced liquid column in the filled reservoir. According to the subject invention, the fluid coupling 18 has a first tubular member 46 extending from the outlet orifice 21, a second tubular member 47 extending around and being removable from the first tubular member and having the outlet conduit connected thereto, such as via the nipple 29. Consistent priming of the pump at the reduced reservoir height and reduced piston stroke is assured by the outlet check valve 48 located in the first tubular member 46 and biased toward the outlet orifice 21, preferably against a valve seat 49 located thereat.

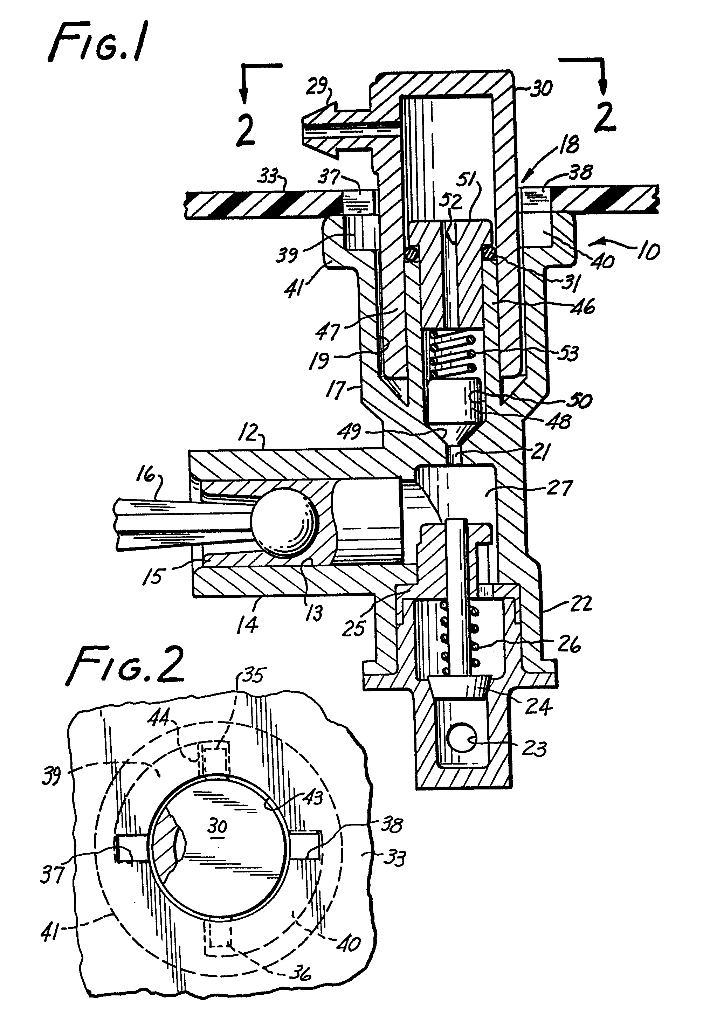

According to the illustrated preferred embodiment of the invention, the first tubular member 46 is a valve guide 50 for the outlet check valve 48. The illustrated pump unit 10 includes a retainer member 51 for retaining the outlet check valve 48 in the first tubular member 46. As shown in Fig. 1, such retainer member 51 is a third tubular member 52 fit into the first tubular member 46 for retaining the outlet check valve 48 in that first tubular member. A circular seal 31 is captivated by the retainer member 51 or tubular member 52 for sealing the second tubular member 47 releasably relative to the first tubular member 46 when the plug 30 is inserted into the socket or well 19.

The pump unit according to the subject invention readily primes itself even at the greatly reduced piston strokes and pressure heads prevailing in miniaturised oral hygiene appliances. Most importantly, the pump unit according to the subject invention primes itself even if its interior and the outlet hose and nozzle are initially dry when the pump starts operating.

Various operational and maintenance advantages are also realised by using the outlet structure and valve arrangement according to the subject invention and its preferred embodiments. For instance, assembly, operation and accessibility of the outlet valve 48 for repair, replacement or cleaning are facilitated by disposing that valve in a tubular member 46 which may act as a valve guide 50 and which can accommodate a removable retainer 51 or tubular outlet member 52. At the same time, the tubular outlet valve housing 46 serves readily as the inner recipient of an outlet plug 30 which selectively may be inserted into and removed from the unit or socket 19, at the convenience of the user of the device. The top of the outlet valve housing 46 may thereby serve as a support for a sealing device 31, thereby preventing fluid leakage from the inserted outlet plug 30.

In practice, the bias provided by the spring 53 may be provided in various ways and, if desired, may be functional. For instance, the spring 53 may be omitted and the bias provided by gravity, or by suction on the valve body 48 when the piston 15 is in its outward or suction stroke. The expression "biased toward the outlet orifice" herein employed relative to the valve 48 is intended to cover all these possibilities.

Claims:

1.   A piston pump (10) for delivering intermittent liquid jets through a nozzle by pumping liquid from a reservoir through an inlet valve (24), pump chamber (27), outlet orifice (21), fluid coupling (18), and outlet conduit to the nozzle of a miniaturised appliance having a reduced reservoir height and reduced piston stroke, relative to standard units, tending to jeopardise consistent priming of the pump under a pressure head provided by a reduced liquid column in the filled reservoir, characterised in that
the fluid coupling (18) has a first tubular member (46) extending from the outlet orifice (21), a second tubular member (47) extending around and being removable from the first tubular member and having the outlet conduit connected thereto, and consistent priming of the pump at the reduced reservoir height and reduced piston stroke is assured by an outlet check valve (48) located in the first tubular member and biased toward the outlet orifice.

2.   A piston pump as claimed in claim 1, wherein the first tubular member (46) is a valve guide (50) for the outlet check valve (48).

3.   A piston pump as claimed in claim 1 or 2, including a retainer member (51) for retaining the outlet check valve (48) in the first tubular member.

4.   A piston pump as claimed in claim 3, wherein the retainer member (51) is a third tubular member (52) fit into the first tubular member (46) for retaining the outlet check valve (48) in the first tubular member.

5.   A piston pump as claimed in claim 3 or 4, including a circular seal (31) captivated by the retainer member (51) for sealing the second tubular member (47) releasably relative to the first tubular member.

0102724

**F𝐼𝐺.1**

**F𝐼𝐺.2**